# FASCICULE DE BREVET EUROPEEN

(11) **EP 0 972 663 B1**
(45) Date de publication et mention de la délivrance du brevet: **09.04.2003**
(21) Numéro de dépôt: 99460048.4
(22) Date de dépôt: 16.07.1999
(51) Int. Cl.: B60J 1/16, E05D 15/10

(54) **Dispositif d'obturation d'une baie ménagée dans la carrosserie d'un véhicule, à poignée présentant un plan incliné**
Abschlussvorrichtung für Öffnung in einer Fahrzeugkarosserie mit Griff mit geneigter Fläche
Closing device for an opening in a vehicle body, with a handle with an inclined plane

(30) Priorité: 16.07.1998 FR 9809315
(43) Date de publication de la demande: 19.01.2000
(73) Titulaire: WAGON AUTOMOTIVE SNC, 79300 Bressuire (FR)
(72) Inventeur: Cousson, Francois, 79430 La Chapelle St. Laurent (FR)
(74) Mandataire: Vidon, Patrice

(56) Documents cités:
- EP-A- 0 778 168
- DE-A- 1 963 309
- DE-A- 4 416 827
- GB-A- 1 374 426
- GB-A- 2 039 313

## Description

Le domaine de l'invention est celui des baies de véhicule. Plus précisément, l'invention concerne les dispositifs d'obturation d'une baie ménagée dans la carrosserie d'un véhicule, comprenant une partie fixe et une partie mobile. Plus précisément encore, l'invention concerne de tels dispositifs d'obturation présentant un aspect affleurant sur la carrosserie, et pourvus d'un panneau mobile.

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe qui viennent pincer simultanément les bords de la glace et de l'ouverture ménagée dans la carrosserie, avec une garniture d'étanchéité.

Une autre technique est décrite dans les documents de brevet EP-A-0 778 168 et EP-A-0 857 844, au nom du même déposant que la présente demande. Le dispositif d'obturation présenté dans ces documents comprend une partie fixe et une partie mobile par rapport à la partie fixe. Cette partie mobile est reliée à la partie fixe par des éléments fonctionnels qui assurent la mobilité requise et qui sont rapportée sur la face de la partie fixe tournée vers l'intérieur du véhicule.

Pour agir sur un tel dispositif, c'est-à-dire pour ouvrir ou fermer la glace, on prévoit une poignée. La solution classique est de monter une poignée sur l'un des rails de coulissement, qui agit sur une came logée dans ce rail. Dans la position fermée, la poignée est parallèle à la glace, et la came force celle-ci dans la position fermée.

En tirant sur la poignée, de façon à l'amener sensiblement perpendiculaire à la glace (dans un plan horizontal), on déplace la came, qui libère la glace et lui permet de venir dans la position de coulissement.

Cette technique présente de nombreux inconvénients. Tout d'abord, une telle poignée est difficile à manipuler. Il est nécessaire de prévoir une longueur suffisante (au moins 6 centimètres) pour la préemption, ce qui induit un encombrement non négligeable, en position ouverte.

Par ailleurs, elle n'est pas facile à mettre en oeuvre, lors du montage, puisqu'il est nécessaire de rapporter la came et la poignée dans le rail de coulissement, la partie mobile étant déjà en place.

De plus, il est souhaitable que les manipulations soient simplifiées tant pour des raisons d'ergonomie que de sécurité. Notamment, la fermeture et l'immobilisation en position ouverte de la partie mobile devraient être automatiques, ce qui n'est pas le cas avec les techniques connues.

L'invention a notamment pour objectif de pallier ces inconvénients et ces manques de l'état de la technique.

Plus précisément, un objectif de l'invention est de fournir un dispositif d'obturation d'une baie ménagée dans la carrosserie d'un véhicule, muni d'une poignée qui soit facile à manipuler, et qui présente un encombrement réduit.

Un autre objectif de l'invention est de fournir un tel dispositif, dont la poignée permet un verrouillage ou un blocage simple et efficace, tant en position fermée qu'en position ouverte.

L'invention a également pour objectif de fournir un tel dispositif, qui soit simple et peu coûteux à fabriquer et à monter.

Encore un autre objectif de l'invention est de fournir un tel dispositif, qui présente de bonnes qualités anti-effraction.

L'invention a également pour objectif de fournir un tel dispositif, qui soit facile à manipuler, et notamment qui permette en une seule manipulation ergonomique le déverrouillage et le coulissement de la partie mobile.

Ces objectifs, ainsi que d'autres qui apparaissent pour la suite, sont atteints à l'aide d'un dispositif d'obturation d'une baie ménagée dans la carrosserie d'un véhicule, du type comprenant une partie fixe, destinée à être rapportée sur ladite carrosserie, et une partie mobile par rapport à ladite partie fixe, montée coulissante sur au moins un élément de support et/ou de guidage solidaire de ladite partie fixe, ladite partie mobile venant fermer ou libérer une ouverture ménagée dans, ladite partie fixe.

Dans ce dispositif d'obturation, ladite partie mobile porte une poignée de verrouillage pouvant être déplacée entre:
- une position de verrouillage, dans laquelle ladite partie mobile se trouve dans le plan de ladite partie fixe pour obturer ladite ouverture;
- une position de libération, dans laquelle ladite partie mobile est décalée dans un plan de coulissement parallèle audit plan formé par ladite partie fixe, et peut coulisser par rapport à ladite partie fixe
   (Dispositif du type divulgué par exemple, dans EP-A-0 857 844 ou EP-A-0 778 168).

Selon l'invention, le dispositif d'obturation comprend une poignée de verrouillage, telle que décrite en partie caractérisante de la revendication 1.

Ainsi, l'encombrement de la poignée est réduit, quelle que soit sa position, et sa manipulation est aisée. La réalisation et la mise en oeuvre d'une telle poignée sont ainsi particulièrement simples. La zone de transition, formant un plan incliné, permet un passage progressif de l'une à l'autre des positions.

De façon avantageuse, ladite poignée comprend des moyens de rappel ramenant ladite poignée vers ladite position de verrouillage. Ainsi, le verrouillage est effectuée de façon automatique, dès qu'on relache la poignée.

Avantageusement, ladite poignée de verrouillage peut prendre également une position intermédiaire de maintien de ladite partie mobile dans une position ouverte donnée. Dans ce cas, ladite zone de transition peut avantageusement coopérer avec ledit élément d'appui.

Ainsi, la partie mobile est automatiquement maintenue avec l'ouverture souhaitée. Elle est en effet plaquée contre la partie fixe sous l'effet de la force de rappel, dès que l'utilisateur relache la poignée.

Selon un mode de mise en oeuvre de l'invention, ledit élément d'appui correspond à un bord d'un rail de coulissement de ladite partie mobile. Le montage est alors très simple.

Selon un premier mode de réalisation de l'invention, la poignée est mobile en rotation. Ladite poignée de verrouillage est donc montée sur un axe de rotation sensiblement perpendiculaire au plan formé par ladite partie mobile.

Selon un second mode de réalisation de l'invention, ladite poignée de verrouillage est montée mobile en translation selon un axe sensiblement vertical.

Dans ce dernier cas, on prévoit avantageusement que l'on doive ramener ladite poignée vers le haut pour passer de ladite position de verrouillage à ladite position de libération.

Selon un mode de réalisation avantageux de l'invention, le dispositif comprend des moyens de sécurisation du verrouillage, immobilisant ladite poignée dans ladite position de verrouillage lorsqu'ils ne sont pas actionnés par l'utilisateur.

Ainsi, il est difficile d'ouvrir par effraction le dispositif, car il faut agir simultanément sur deux éléments distincts.

Préférentiellement, lesdits moyens de sécurisation sont conçus de façon à être actionnable d'une seule main, simultanément auxdits moyens de verrouillage.

Ainsi, dans le second mode de réalisation, lesdits moyens de sécurisation sont avantageusement mobiles en translation, parallèlement audit axe sensiblement vertical. On peut ainsi prévoir que lesdits moyens de sécurisation et ladite poignée de verrouillage présente, en partie supérieure, un élément de préhension.

L'invention peut notamment être mise en oeuvre de deux façons, selon le sens d'ouverture (vers l'intérieur ou vers l'extérieur) :
- si ladite partie mobile est ramenée vers l'intérieur dudit véhicule, lors de l'ouverture, ledit élément d'appui correspond à l'intérieur dudit rail de coulissement ;
- si ladite partie mobile est déplacée vers l'extérieur dudit véhicule, lors de l'ouverture, ledit élément d'appui correspond à l'extérieur dudit rail de coulissement.

De façon préférentielle, le dispositif de l'invention comprend des moyens pour appliquer une pression suffisante sur la longueur de ladite partie mobile. Cela permet d'assurer l'étanchéité du dispositif, ladite poignée étant placée sensiblement au milieu de l'élément de support et/ou de guidage avec lequel elle coopère.

L'élément de support et/ou de guidage étant suffisamment rigide, l'ensemble forme un bloc rigide, une fois les éventuels jeux de fonctionnement rattrapés, assurant une bonne étanchéité.

D'autres caractéristiques et avantages de l'invention apparaîtront plus clairement à la lecture de la description suivante de deux modes de réalisation préférentiels de l'invention, donnés à titre de simples exemples illustratifs et non limitatifs, et des dessins annexés, parmi lesquels :
- la figure 1 illustre un dispositif d'obturation d'une baie selon l'invention ;
- les figures 2A et 2B présentent, en vue de côté, un premier mode de réalisation d'une poignée de verrouillage de dispositif de la figure 1, respectivement en position de coulissement et en position fermée ;
- la figure 3 illustre, vue de face, la poignée de verrouillage des figures 2A et 2B, dans différentes positions qu'elle peut prendre par rapport au dispositif d'obturation ;
- la figure 4 est une coupe de la poignée de verrouillage de la figure 3, selon la section A-A ;
- les figures 5A et 5B illustrent, en vue de côté, un second mode de régulation d'une poignée de verrouillage selon l'invention, respectivement en position de coulissement position fermée ;
- la figure 6 présente, en coupe, un mode de réalisation de la poignée les figures SA et 5B.

Le dispositif d'obturation d'une baie selon l'invention est prévue pour équiper un véhicule. Il est destiné à être rapporté sur une ouverture réalisée sur la carrosserie du véhicule. Une telle ouverture peut être réalisée sur une paroi latérale du véhicule, le pavillon,... Elle peut être plane ou incurvée, de façon à suivre la carrosserie.

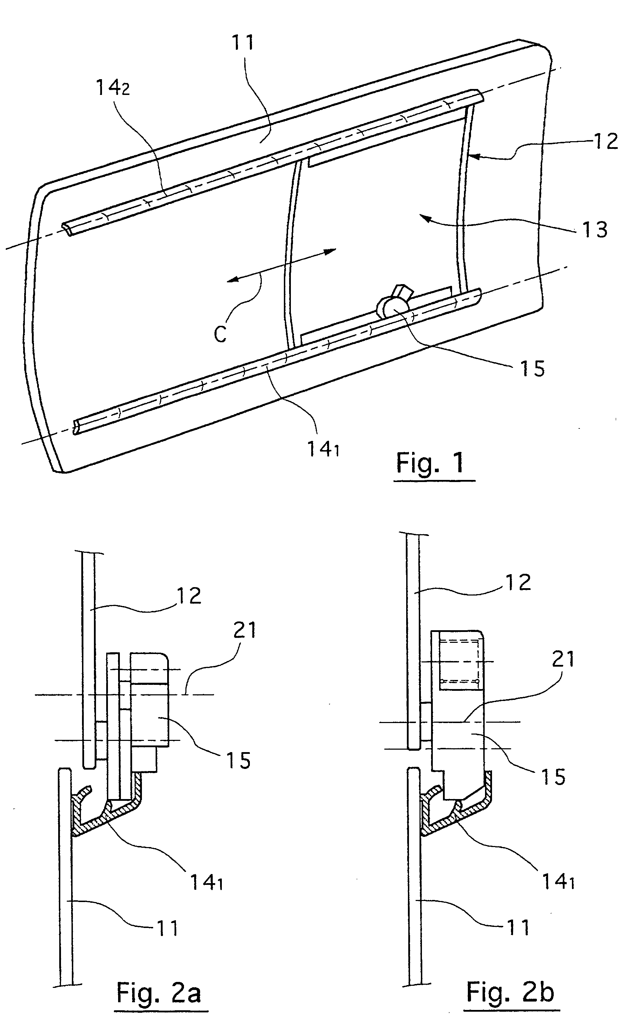

Ce dispositif d'obturation est par exemple du type décrit dans le document de brevet EP-A-0 857 844, et tel qu'illustré schématiquement par la figure 1.

Il comprend une partie fixe 11, qui sera rapportée sur la carrosserie du véhicule, par exemple par collage. Une partie mobile 12, montée sur la partie fixe 11, permet de fermer ou de libérer une ouverture 13 définie dans cette partie fixe. Des rails 14₁ et 14₂, fixés sur la face intérieure de la partie fixe 11, assurent le guidage de la partie mobile 12 en coulissant le long de la partie fixe.

Avantageusement, le mouvement de la partie mobile 12 par rapport à la partie fixe 11 est décomposée en deux déplacements indépendants :
- un déplacement perpendiculaire par rapport au plan formé par la partie fixe, permettant le passage d'une position fermée, et verrouillée, dans laquelle la partie mobile 12 se trouve dans le même plan que la partie fixe 11, et obture l'ouverture, à une position de libération, dans laquelle la partie mobile 12 est décalée dans un plan de coulissement, par rapport à la partie fixe 11, de façon à permettre le coulissement ;
- un déplacement parallèle au plan formé par la partie fixe, dans le plan de coulissement.

Bien sûr, d'autres mouvements sont possibles. Par exemple, la partie mobile peut suivre une courbe selon laquelle les deux mouvements (verrouillage/déverrouillage et coulissement) sont liés.

Selon l'invention, les opérations de verrouillage et de déverrouillage sont contrôlées par une poignée présentant des zones fonctionnelles d'épaisseurs distinctes (l'une correspondant à la position ouverte et l'autre à la position fermée), reliées par une zone de transition continue, telle qu'un plan incliné.

Selon un premier mode de réalisation, cette poignée est une poignée rotative.

Cette poignée 15 est montée sur la partie mobile 12 selon un axe de rotation 21 sensiblement perpendiculaire au plan formé par la partie mobile 12, et coopère avec un des rails de coulissement (le rail inférieur 14₁ dans le mode de réalisation illustré).

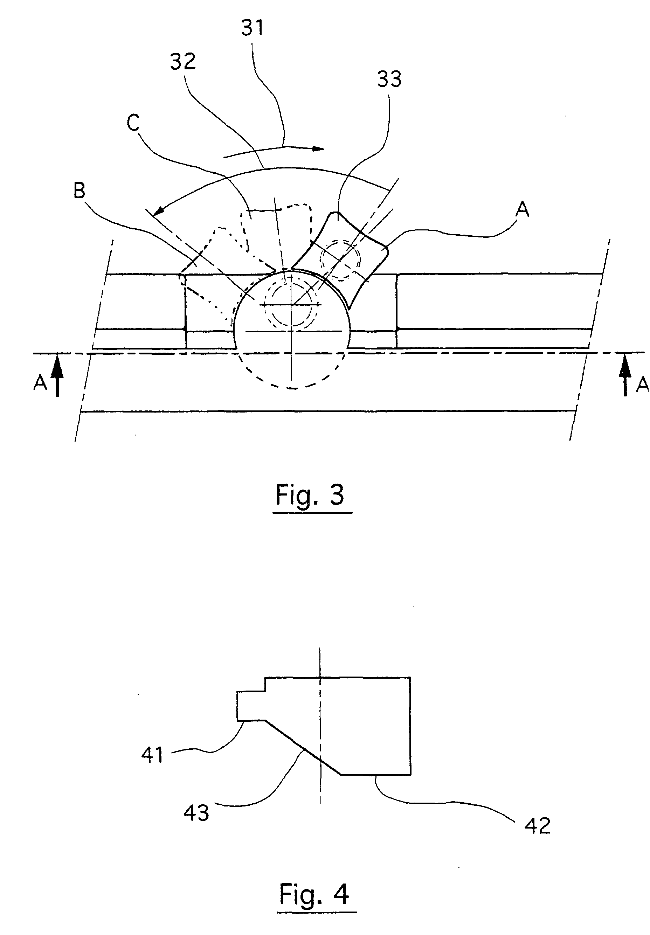

Comme cela apparaît sur la figure 4, qui est une coupe de la poignée selon la section A-A, la poignée présente deux zones fonctionnelles distinctes 41 et 42, qui ont des épaisseurs distinctes. En coopérant avec le rail 14, elles permettent de contrôler le verrouillage et la libération de la partie mobile 12 :
- sur la figure 2A, c'est la zone 41 de moindre épaisseur qui est en appui sur le rail 14 (la zone 42 de forte épaisseur étant décalée au-dessus du rail). La partie mobile 12 se trouve alors dans son plan de coulissement ;
- sur la figure 2B, la partie mobile 12 est en revanche ramenée dans le plan de la partie fixe 11, en position fermée. C'est la zone 42 de plus forte épaisseur qui coopère avec le rail 14, de façon à maintenir la partie mobile 12 en position fermée.

Les deux zones fonctionnelles 41 et 42 sont reliées selon la section A-A, par une zone de transition 43, formant un plan incliné (ou plus généralement une surface continue de guidage), qui facilite le passage de la position de coulissement à la position fermée et inversement.

Des moyens de rappel (non représentés) sont prévus à l'intérieur de la poignée de verrouillage, ramenant cette dernière vers la position fermée (flèche 3, figure 3), lorsque aucune action n'est appliquée sur la poignée. Le plan incliné 43 facilite ce mouvement.

Ainsi, lorsque l'on se trouve en position fermée, l'élément de préemption 33 de la poignée se trouve dans la position A (figure 3). Elle y est maintenue sous l'effet de la force de rappel. Pour ouvrir la glace, l'utilisateur imprime à la poignée le déplacement illustré par la flèche 32 (en opposition à la force de rappel 31) pour amener la poignée dans la position B (correspondant à la figure 2A). Il peut alors faire coulisser la partie mobile, en maintenant la poignée dans la position B.

Lorsque l'utilisateur relâche la poignée, celle-ci peut prendre deux positions, sous l'effet de la force de rappel 31 :
- si la partie mobile 12 se trouve en regard de l'ouverture 13, le dispositif se ferme automatiquement (retour de la poignée dans la position A) ;
- si la partie mobile 12 a été coulissée, la force de rappel entraîne la poignée jusqu'à une position intermédiaire C, jusqu'à ce que la partie mobile soit plaquée contre la partie fixe.

Dans cette seconde situation, c'est le plan incliné 43 qui coopère avec le rail 14. On obtient ainsi une position de verrouillage intermédiaire, qui permet de maintenir la partie mobile 12 dans une ouverture choisie (léger entrebaillement, ouverture totale...).

Pour obtenir une bonne étanchéité du dispositif, en position fermée, on cherchera à appliquer la pression due à la poignée sur toute la longueur (ou sur la plus grande partie possible). Pour cela, la poignée est placée de préférence au milieu du rail.

Dans le mode de réalisation décrit ci-dessous, la partie mobile est ramenée vers l'intérieur. Il est clair cependant, qu'un mécanisme similaire peut être mis en oeuvre pour un dispositif dans lequel la partie mobile se déplace vers l'intérieur du véhicule. Dans ce cas, la poignée peut coopérer avec la face extérieure du rail, et non sa face intérieure, les rôles des deux parties fonctionnelles d'épaisseur distinctes étant inversés.

Par ailleurs, bien sûr, de nombreuses modifications ou adaptations peuvent être envisagées, en fonction des besoins et des utilisations. Par exemple, l'élément de préemption 33 peut être de toute forme adaptée, et placée à toute position autour de l'axe de rotation (de façon à permettre l'accès et la manipulation les plus aisés). Sur le plan mécanique, il peut être prévu que la poignée ne coopère pas directement avec le rail, mais avec une surface d'appui prévue à cet effet. On peut également prévoir des moyens complémentaires, tel qu'une sécurité, permettant de bloquer la poignée dans la position fermée.

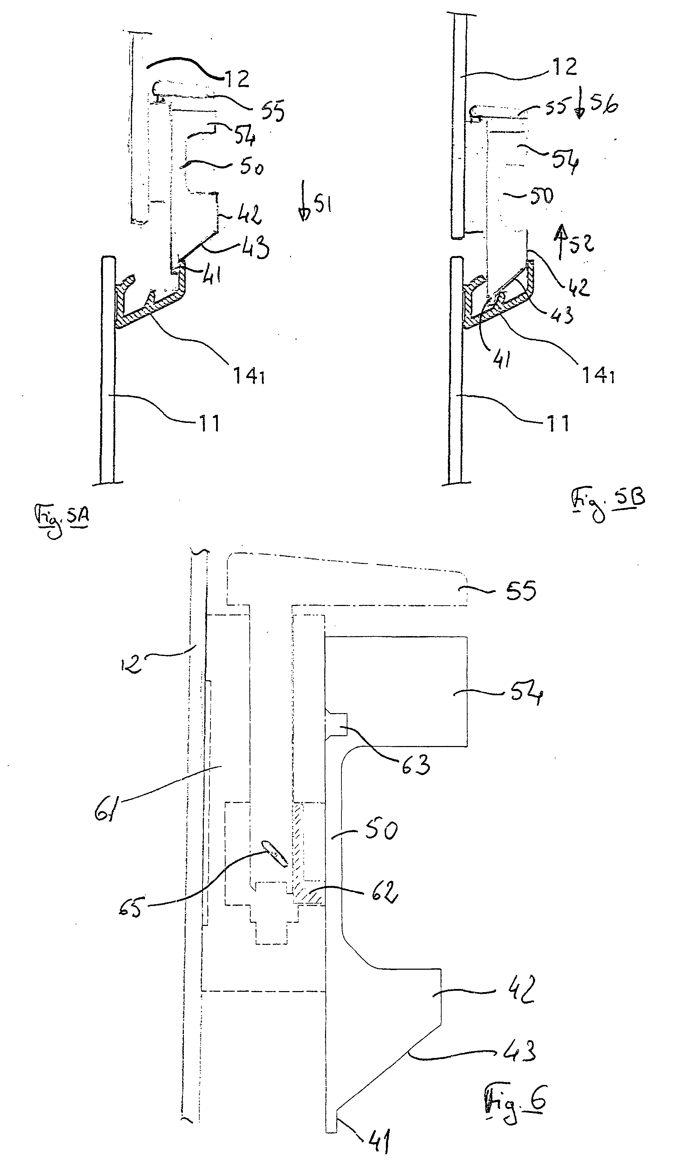

Les figures 5A et 5B illustrent un second mode de réalisation de mise en oeuvre de l'invention, selon lequel la poignée n'est plus rotative, mais mobile en translation, selon un axe vertical, ou pratiquement vertical (dans le cas d'une vitre latérale pour lequel le coulissement de la partie mobile est horizontal).

Fonctionnellement, le principe de cette poignée est similaire à celui décrit précédemment. On y retrouve les zones fonctionnelles 41 et 42 commentées en relation avec la figure 4, et la zone de transition 43, présentant un plan incliné. La différence réside dans la cinématique de la poignée.

En position ouverte (figure 5A), la zone fonctionnelle 41 est en contact avec le rail 14₁. La partie mobile 12 est décalée vers l'intérieur par rapport à la partie fixe 11, et le coulissement est donc possible. Il suffit d'appuyer vers le bas sur la poignée (flèche 51), pour passer en position fermée (figure 5B), sous réserve bien sûr que la partie mobile se trouve en regard de l'ouverture à obturer.

En position fermée, c'est la zone fonctionnelle 42 qui se trouve en contact avec le rail 14₁. En entraînant la poignée 50 vers le haut (flèche 52), on repasse à la position de la figure 5A.

La poignée 50 présente en sa partie haute une zone 54 de préemption. On notera que cette zone permet simultanément le déplacement de la poignée vers le haut ou vers le bas (flèches 51 et 52) mais également le déplacement en coulissement de la partie mobile.

Selon un aspect avantageux de l'invention, on prévoit un élément de sécurisation 55 complémentaire, qui, dans la position de repos, empêche l'ouverture de la vitre, c'est-à-dire le déplacement de la poignée 50 selon la flèche 52. Pour rendre ce déplacement possible, il faut agir simultanément sur l'élément de sécurisation 55, dans le sens opposé (flèche 56).

Cette double action est aisée, et intuitive, puisqu'il suffit à l'utilisateur de prendre simultanément en main l'élément de préemption 54 et l'élément de sécurisation 55, et de les rapprocher l'un vers l'autre. En revanche, ce mécanisme offre une bonne sécurité anti-effraction, puisqu'une personne mal intentionnée qui tenterait d'agir en introduisant des tringles entre la partie mobile et la partie fixe devrait agir simultanément sur les deux éléments, et non sur un seul.

La figure 6 présente plus en détail, en coupe, ce mécanisme.

Le support 61 de la poignée est collé à la vitre mobile 12. Il porte d'une part la poignée 50 elle-même, ici représentée en position de coulissement, et l'élément de sécurisation 55.

La poignée 50 est équipée de moyens de rappel (non représentés) qui tendent à la ramener vers la position fermée (c'est-à-dire vers le bas). De même, des moyens de rappel tendent à ramener l'élément de sécurisation 55 vers le haut, dans une position dans laquelle il bloque la poignée 50, lorsqu'elle se trouve en position fermée.

Le blocage est assuré par l'engagement d'un pêne 62 dans le logement correspondant 63 prévu à cet effet dans la poignée 50.

Un plan incliné 65 ménagé dans l'élément de sécurisation 55 assure le dégagement du pêne 62, lorsque l'élément de sécurisation est actionné par l'utilisateur.

Bien sûr, d'autres modes de mise en oeuvre de moyens de sécurisation peuvent être envisagés, pour assurer la même fonction. Par ailleurs, il est clair qu'un mécanisme de sécurisation similaire peut être envisagé sur la poignée rotative décrite précédemment.

## Revendications

1. Dispositif d'obturation d'une baie ménagée dans la carrosserie d'un véhicule, du type comprenant une partie fixe (11), destinée à être rapportée sur ladite carrosserie, et une partie mobile (12) par rapport à ladite partie fixe (11), montée coulissante sur au moins un élément de support et/ou de guidage (14₁, 14₂) solidaire de ladite partie fixe (11), ladite partie mobile (12) venant fermer ou libérer une ouverture (13) ménagée dans ladite partie fixe (11),
ladite partie mobile portant une poignée de verrouillage (15, 50) pouvant être déplacée entre :
- une position de verrouillage (A), dans laquelle ladite partie mobile (12) se trouve dans le plan de ladite partie fixe (11) pour obturer ladite ouverture (13) ;
- une position de libération (B), dans laquelle ladite partie mobile (12) est décalée dans un plan de coulissement parallèle audit plan formé par ladite partie fixe (11), et peut coulisser par rapport à ladite partie fixe (11),
**caractérisé en ce que** ladite poignée comprend au moins deux zones fonctionnelles distinctes (41, 42) présentant des épaisseurs différentes et venant sélectivement prendre appui sur un élément d'appui (141) solidaire de ladite partie fixe (11), une première zone (42) de première épaisseur correspondant à ladite position de verrouillage (A) et une seconde zone (41), d'épaisseur inférieure à celle de ladite première zone (42), correspondant à ladite position de libération (B), lesdites zones fonctionnelles (41, 42) étant reliées par une zone de transition (43), formant un plan incliné.

2. Dispositif d'obturation selon 1a revendication 1, **caractérisé en ce qu'**il comprend des moyens de rappel ramenant (31) ladite poignée (15) vers ladite position de verrouillage (A).

3. Dispositif d'obturation selon l'une quelconque des revendications 1 et 2, **caractérisé en ce que** ladite poignée de verrouillage (15) peut prendre également une position intermédiaire (C) de maintien de ladite partie mobile (12) dans une position ouverte donnée.

4. Dispositif d'obturation selon les revendications 3 et 5, **caractérisé en ce que**, dans ladite position intermédiaire (C), ladite zone de transition (43) coopère avec ledit élément d'appui (14₁).

5. Dispositif d'obturation selon l'une quelconque des revendications 1 à 4, **caractérisé en ce que** ledit élément d'appui correspond à un bord d'un rail de coulissement (14₁) de ladite partie mobile.

6. Dispositif d'obturation selon la revendication 5, **caractérisé en ce que** ladite partie mobile (12) est ramenée vers l'intérieur dudit véhicule, lors de l'ouverture, et **en ce que** ledit élément d'appui correspond à l'intérieur dudit rail de coulissement.

7. Dispositif d'obturation selon la revendication 5, **caractérisé en ce que** ladite partie mobile (12) est déplacée vers l'extérieur dudit véhicule, lors de l'ouverture, et **en ce que** ledit élément d'appui correspond à l'extérieur dudit rail de coulissement.

8. Dispositif d'obturation selon l'une quelconque des revendications 1 à 7, **caractérisé en ce qu'**il comprend des moyens pour appliquer une pression suffisante sur la longueur de ladite partie mobile (12), ladite poignée (15) étant placée sensiblement au milieu de l'élément de support et/ou de guidage (14₁) avec lequel elle coopère.

9. Dispositif selon l'une quelconque des revendications 1 à 8, **caractérisé en ce que** ladite poignée de verrouillage (15) est montée sur un axe de rotation (21) sensiblement perpendiculaire au plan formé par ladite partie mobile (12).

10. Dispositif selon l'une quelconque des revendications 1 à 8, **caractérisé en ce que** ladite poignée de verrouillage (15) est montée mobile en translation selon un axe sensiblement vertical.

11. Dispositif selon la revendication 10, **caractérisé en ce que** l'on ramène ladite poignée vers le haut pour passer de ladite position de verrouillage à ladite position de libération.

12. Dispositif selon l'une quelconque des revendications 1 à 11, **caractérisé en ce qu'**il comprend des moyens de sécurisation du verrouillage, immobilisant ladite poignée dans ladite position de verrouillage lorsqu'ils ne sont pas actionnés par l'utilisateur.

13. Dispositif selon la revendication 12, **caractérisé en ce que** lesdits moyens de sécurisation sont conçus de façon à être actionnable d'une seule main, simultanément auxdits moyens de verrouillage.

14. Dispositif selon la revendication 13 et l'une quelconque des revendications 10 et 11, **caractérisé en ce que** lesdits moyens de sécurisation sont mobiles en translation, parallèlement audit axe sensiblement vertical.

15. Dispositif selon la revendication 14, **caractérisé en ce que** lesdits moyens de sécurisation et ladite poignée de verrouillage présente, en partie supérieure, un élément de préhension.

## Claims

1. Device for closing an opening disposed in the body of a vehicle, the said device being of the type comprising a fixed part (11) which is intended to be attached to the said body, and a part (12) which is movable in relation to the said fixed part (11) and is mounted so as to slide on at least one supporting and/or guiding element (14₁, 14₂) which is integral with the said fixed part (11), the said movable part (12) shutting or unblocking an aperture (13) disposed in the said fixed part (11),
the said movable part carrying a locking handle (15, 50) which is capable of being displaced between:
- a locking position (A) in which the said movable part (12) is located in the plane of the said fixed part (11) so as to close the said aperture (13);
- an unblocking position (B) in which the said movable part (12) is offset in a sliding plane parallel to the said plane formed by the said fixed part (11), and is capable of sliding in relation to the said fixed part (11),
**characterised in that** the said handle comprises at least two distinct functional zones (41, 42) which have different thicknesses and which rest, selectively, on a supporting element (141) which is integral with the said fixed part (11), a first zone (42), which has a first thickness, corresponding to the said locking position (A) and a second zone (41), which has a thickness lower than that of the said first zone (42), corresponding to the said unblocking position (B), the said functional zones (41, 42) being connected by a transition zone (43) forming an inclined plane.

2. Closing device according to claim 1, **characterised in that** it comprises returning means which bring (31) the said handle (15) back towards the said locking position (A).

3. Closing device according to any one of claims 1 and 2, **characterised in that** the said locking handle (15) is also capable of assuming an intermediate position (C) that keeps the said movable part (12) in a given open position.

4. Closing device according to claims 3 and 5, **characterised in that**, in the said intermediate position. (C), the said transition zone (43) cooperates with the said supporting element (14₁).

5. Closing device according to any one of claims 1 to 4, **characterised in that** the said supporting element corresponds to one edge of a sliding rail (14₁) belonging to the said movable part.

6. Closing device according to claim 5, **characterised in that** the said movable part (12) is brought back towards the inside of the said vehicle when opening takes place, and **in that** the said supporting element corresponds to the inside of the said sliding rail.

7. Closing device according to claim 5, **characterised in that** the said movable part (12) is displaced towards the outside of the said vehicle when opening takes place, and **in that** the said supporting element corresponds to the outside of the said sliding rail.

8. Closing device according to any one of claims 1 to 7, **characterised in that** it comprises means for applying sufficient pressure over the length of the said movable part (12), the said handle (15) being placed substantially in the middle of the supporting and/or guiding element (14₁) with which it cooperates.

9. Device according to any one of claims 1 to 8, **characterised in that** the said locking handle (15) is mounted on an axis of rotation (21) which is substantially perpendicular to the plane formed by the said movable part (12).

10. Device according to any one of claims 1 to 8, **characterised in that** the said locking handle (15) is mounted so as to be movable in translation along a substantially vertical axis.

11. Device according to claim 10, **characterised in that** the said handle is brought back in the upward direction in order to pass from the locking position to the said unblocking position.

12. Device according to any one of claims 1 to 11, **characterised in that** it comprises means for securing the locking which immobilise the said handle in the said locking position when they are not activated by the user.

13. Device according to claim 12, **characterised in that** the said securing means are designed in such a way as to be activatable by only one hand and simultaneously with the said locking means.

14. Device according to claim 13 and any one of claims 10 and 11, **characterised in that** the said securing means are movable in translation, parallel to the said substantially vertical axis.

15. Device according to claim 14, **characterised in that** the said securing means and the said locking handle have, at the top, a gripping element.

## Patentansprüche

1. Vorrichtung zum Verschließen einer Öffnung in der Karosserie eines Fahrzeugs, die ein feststehendes Teil (11) umfasst, das auf der Karosserie angebracht wird und ein im Verhältnis zu diesem feststehenden Teil (11) bewegliches Teil (12), welches gleitend auf mindestens einem mit dem feststehenden Teil (11) eng verbundenes Trag- und/oder Leitelement (14₁, 14₂) angebracht ist, wobei das erwähnte bewegliche Teil (12) eine Öffnung (13) im feststehenden Teil (11) verschließt oder freigibt,
wobei das bewegliche Teil einen Verriegelungsgriff (15, 50) aufweist, welcher sich zwischen den folgenden Stellungen bewegen lässt:
- einer Verriegelungsstellung (A), in der das bewegliche Teil (12) sich in der Ebene des feststehenden Teils (11) befindet und die Öffnung (13) verschließt;
- einer Freigabestellung (B), bei der das bewegliche Teil (12) in eine Gleitebene verschoben wird, die parallel zu der vom feststehenden Teil (11) gebildeten Ebene verläuft und die gleitend gegenüber diesem feststehenden Teil (11) bewegt wird,
**dadurch gekennzeichnet, dass** der erwähnte Griff mindestens zwei verschiedene funktionelle Bereiche (41, 42) umfasst, die verschiedene Stärken aufweisen und selektiv auf einem Stützelement (141) aufliegen, welches eng mit dem feststehenden Teil (11) verbunden ist, nämlich einem ersten Bereich (42), der eine erste Stärke aufweist und der ersten Verriegelungsstellung (A) entspricht und einem zweiten Bereich (41), dessen Stärke geringer als die des ersten Bereichs (42) ist und der Freigabestellung (B) entspricht, wobei die zwei funktionellen Bereiche (41, 42) durch einen eine schiefe Ebene bildenden Übergangsbereich (43) verbunden sind.

2. Verschlussvorrichtung nach Anspruch 1, **dadurch gekennzeichnet, dass** sie über Mittel zum Rückholen verfügt, die den Griff (15) in die erwähnte Verriegelungsstellung (A) zurückholen (31).

3. Verschlussvorrichtung nach einem der Ansprüche 1 oder 2, **dadurch gekennzeichnet, dass** der Verriegelungsgriff (15) auch eine mittlere Stellung (C) einnehmen kann, bei der das bewegliche Teil (12) in einer gegebenen offenen Stellung gehalten wird.

4. Verschlussvorrichtung nach den Ansprüchen 3 und 5, **dadurch gekennzeichnet, dass** in der Zwischenstellung (C), der Übergangsbereich (43) mit dem Tragelement (14₁) zusammenwirkt.

5. Verschlussvorrichtung nach einem der Ansprüche 1 bis 4, **dadurch gekennzeichnet, dass** das Tragelement dem Rand einer mit dem beweglichen Teil verbundenen Gleitschiene (14₁) entspricht.

6. Verschlussvorrichtung nach Anspruch 5, **dadurch gekennzeichnet, dass** das bewegliche Teil (12) beim Öffnen in das Innere des Fahrzeugs geholt wird und, dass das Tragelement dem Inneren der Gleitschiene entspricht.

7. Verschlussvorrichtung nach Anspruch 5, **dadurch gekennzeichnet, dass** das bewegliche Teil (12) beim Öffnen aus dem Fahrzeug heraus geleitet wird und, dass das Tragelement dem Äußeren der Gleitschiene entspricht.

8. Verschlussvorrichtung nach einem der Ansprüche 1 bis 7, **dadurch gekennzeichnet, dass** sie über Mittel verfügt, um einen ausreichenden Druck über die Länge des beweglichen Teils (12) auszuüben, wobei der Griff (15) in etwa in der Mitte des Trag- und/oder des Leitelementes (14₁), mit dem er zusammenwirkt, angebracht ist.

9. Verschlussvorrichtung nach einem der Ansprüche 1 bis 8, **dadurch gekennzeichnet, dass** der Verriegelungsgriff (15) auf einer Drehachse (21) angebracht ist, die in etwa senkrecht zu der vom beweglichen Teil (12) gebildeten Ebene liegt.

10. Verschlussvorrichtung nach einem der Ansprüche 1 bis 8, **dadurch gekennzeichnet, dass** der Verriegelungsgriff (15) entlang einer in etwa vertikalen Achse verschiebbar angebracht ist.

11. Verschlussvorrichtung nach Anspruch 10, **dadurch gekennzeichnet, dass** der Griff nach oben bewegt wird, um von der Verriegelungsstellung zur Freigabestellung zu wechseln.

12. Verschlussvorrichtung nach einem der Ansprüche 1 bis 11, **dadurch gekennzeichnet, dass** sie über Sicherungsmittel der Verriegelung verfügt, wobei der Griff in der Verriegelungsstellung festgehalten wird, wenn er nicht vom Benutzer betätigt wird.

13. Verschlussvorrichtung nach Anspruch 12, **dadurch gekennzeichnet, dass** die Sicherungsmittel so ausgelegt sind, dass sie gleichzeitig zu den Verriegelungsmitteln mit nur einer Hand betätigt werden können.

14. Verschlussvorrichtung nach Anspruch 13 und nach einem der Ansprüche 10 oder 11, **dadurch gekennzeichnet, dass** die Sicherungsmittel parallel zu der in etwa vertikalen Achse verschiebbar sind.

15. Verschlussvorrichtung nach Anspruch 14, **dadurch gekennzeichnet, dass** die Sicherungsmittel und der Verriegelungsgriff ein Element zum Fassen am oberen Teil aufweisen.
